# FASCICULE DE BREVET EUROPEEN

(11) **EP 3 670 267 B1**
(45) Date de publication et mention de la délivrance du brevet: **14.07.2021**
(21) Numéro de dépôt: 19216589.2
(22) Date de dépôt: 16.12.2019
(51) Int. Cl.: B60R 7/00, B60R 7/04

(54) **SIEGE DE VEHICULE AUTOMOBILE AVEC POCHE DE RANGEMENT ET VEHICULE AUTOMOBILE ASSOCIE**
KRAFTFAHRZEUGSITZ MIT AUFNAHMETASCHE UND ENTSPRECHENDES KRAFTFAHRZEUG
MOTOR VEHICLE SEAT WITH STORAGE POCKET AND ASSOCIATED MOTOR VEHICLE

(30) Priorité: 17.12.2018 FR 1873032
(43) Date de publication de la demande: 24.06.2020
(73) Titulaire: RENAULT s.a.s., 92100 Boulogne-Billancourt (FR)
(72) Inventeur: CHHEANG, Nakry, 78470 Saint Rémy les Chevreuses (FR); CIMOLI, Patrice, 78210 Saint Cyr L'Ecole (FR); DEMEURS, Lea, 78460 Chevreuse (FR)

(56) Documents cités:
- DE-A1-102005 041 935
- DE-U1- 29 603 661
- FR-A1- 2 791 308

## Description

[La présente invention se rapporte à un siège de véhicule automobile équipé d'une poche de rangement, ainsi qu'à un véhicule automobile associé.

Elle appartient au domaine des sièges et trouve application dans le secteur automobile.

Dans les voitures citadines, l'habitabilité des passagers à l'arrière est souvent restreinte.

En effet, selon la position plus ou moins reculée du siège du conducteur et/ou du siège de passager avant, l'espace pour les genoux des passagers à l'arrière peut être plus ou moins réduit.

Afin d'offrir davantage de place aux genoux, la paroi arrière du dossier des sièges avant est parfois creusée en son centre. Néanmoins, ce gain de place est peu significatif lorsqu'une poche de rangement du type aumônière appliquée sur cette paroi, afin que les occupants puissent y ranger divers objets, occupe un volume supérieur à celui gagné par la forme en creux de la paroi du siège.

Les poches aumônières connues sont de divers types. Les poches dont le bord d'ouverture n'est pas élastique, de façon analogue à une poche de chemise, sont économiques, mais leur inconvénient est que la poche peut subir une déformation permanente, voire un déchirement de couture à la suite du rangement de longue durée d'un objet encombrant. Les poches dont le bord d'ouverture est élastique présentent l'inconvénient d'être potentiellement jugées inesthétiques en raison des plis visibles sur le bord de l'ouverture.

Le document FR-A-2 791 308 décrit une poche de rangement dont le bord d'ouverture comporte deux lames flexibles se chevauchant partiellement. DE102005041935A1 est considéré l'état de la technique le plus proche et divulgue un siège conformément au préambule de la revendication 1.

Toutefois, du fait de la présence de ces lames, cette poche, même lorsqu'elle est vide, présente un encombrement susceptible de gêner les occupants assis en regard du dossier équipé de la poche.

La présente invention a pour but de remédier aux inconvénients précités de l'art antérieur.

Dans ce but, la présente invention propose un siège de véhicule automobile comportant une paroi munie d'une poche de rangement, remarquable en ce que la poche présente un bord d'ouverture contenant un profil de renfort épousant la forme de la paroi lorsque la poche est fermée et une sangle élastique traversant la paroi.

Ainsi, lorsque la poche de rangement est vide, elle est entièrement plaquée contre la paroi du siège, de sorte que le volume qu'elle occupe est négligeable.

En outre, même si des objets sont rangés dans la poche, si ces objets ne dépassent pas du bord d'ouverture de la poche, ce bord d'ouverture reste plaqué contre la paroi du siège, ce qui donne plus d'espace pour les genoux d'un occupant assis derrière ce siège.

Par ailleurs, le profil de renfort confère un caractère relativement rigide au bord d'ouverture de la poche, ce qui donne un aspect robuste et esthétique à la poche et donc une perception de qualité du produit par le client.

De plus, le rangement est facilité grâce au bord relativement rigide de la poche qui permet une ouverture large de la poche. Par exemple, il n'est pas nécessaire de forcer sur le bord d'ouverture pour ranger un objet volumineux dans la poche et la poche résiste au rangement d'une bouteille de contenance 33 cl sans subir de déformation irréversible.

Dans un mode particulier de réalisation, le bord d'ouverture et le profil de renfort présentent au voisinage de chacune de leurs extrémités une fente dans laquelle passe la sangle élastique.

Cela permet la mise en place et le coulissement de la sangle élastique. Par ailleurs, les fentes dans le bord d'ouverture de la poche permettent l'insertion du profil de renfort lors du montage.

Dans un mode particulier de réalisation, le profil de renfort est une lame présentant à chacune de ses extrémités une portion pliable.

Cela facilite le plaquage du bord d'ouverture de la poche contre la paroi du siège. Le bord d'ouverture épouse ainsi parfaitement la forme de cette paroi lorsque la poche est fermée.

Dans un mode particulier de réalisation, les fentes précitées sont situées au niveau des plis des portions pliables du profil de renfort.

Cela améliore encore le plaquage du bord d'ouverture de la poche contre la paroi du siège.

Dans un mode particulier de réalisation, la paroi du siège est munie de deux orifices dans lesquels passe la sangle élastique.

Cela permet à la sangle élastique de passer derrière la paroi du siège, ce qui renforce la robustesse du bord d'ouverture de la poche.

Dans l'invention les deux extrémités de la sangle élastique sont fixées entre elles.

Cela permet une installation aisée de la sangle, qui présente deux extrémités libres lors du montage, ces deux extrémités étant fixées entre elles une fois que la sangle est en place.

Dans un mode particulier de réalisation, la sangle élastique est un ruban plat et ses deux extrémités sont fixées entre elles par au moins une agrafe.

Le caractère plat du ruban permet au bord d'ouverture de la poche de ne pas présenter de relief qui pourrait gêner les genoux d'un occupant assis derrière le siège. Les agrafes constituent un mode de fixation simple et peu coûteux des extrémités de la sangle.

Selon une caractéristique particulière possible, le profil de renfort est en matière plastique.

Le plastique représente un bon compromis entre souplesse et robustesse.

Le siège considéré peut par exemple être un siège avant d'un véhicule. Il peut s'agir aussi bien du siège du conducteur que du siège du passager avant.

Dans le même but que celui indiqué plus haut, la présente invention propose également un véhicule automobile, remarquable en ce qu'il comporte au moins un siège tel que succinctement décrit ci-dessus.

Les caractéristiques particulières et avantages du véhicule étant similaires à ceux du siège, ils ne sont pas répétés ici.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique du dos d'un siège conforme à la présente invention, dans un mode particulier de réalisation ;
[Fig. 2] est une vue schématique d'un profil de renfort contenu dans une poche de rangement d'un siège conforme à la présente invention, dans un mode particulier de réalisation ;
[Fig. 3] est une vue schématique partielle de la face externe de la paroi d'un siège conforme à la présente invention, dans un mode particulier de réalisation ;
[Fig. 4] est une vue schématique de la section A-A de la figure 1, lorsque la poche est fermée ;
[Fig. 5] est une vue schématique de la section A-A de la figure 1, lorsque la poche est ouverte ;
[Fig. 6] est une vue agrandie d'une partie de la figure 5 ; et
[Fig. 7] est une vue schématique de la section B-B de la figure 1.

### Description de mode(s) de réalisation

Sur les dessins, l'axe X désigne la direction longitudinale, c'est-à-dire la direction de plus grande longueur du véhicule, l'axe Y désigne la direction transversale du véhicule et Z désigne la direction verticale.

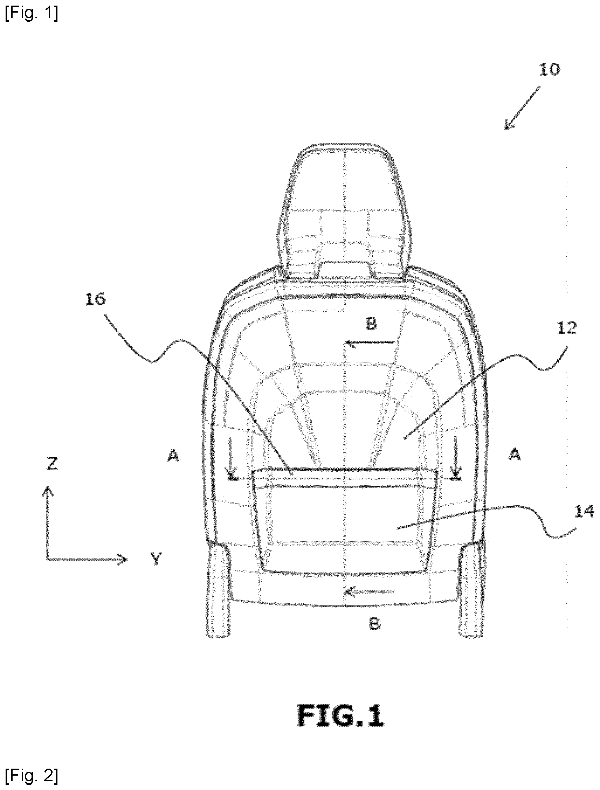

Comme le montre le mode particulier de réalisation de la figure 1, un siège 10 de véhicule automobile conforme à l'invention comporte une paroi 12 munie d'une poche 14 de rangement.

Le siège 10 peut par exemple être un siège avant, côté conducteur ou côté passager, du véhicule.

La paroi 12 est située dans un renfoncement du dos du siège 10, afin de libérer de la place pour les occupants assis derrière le siège 10.

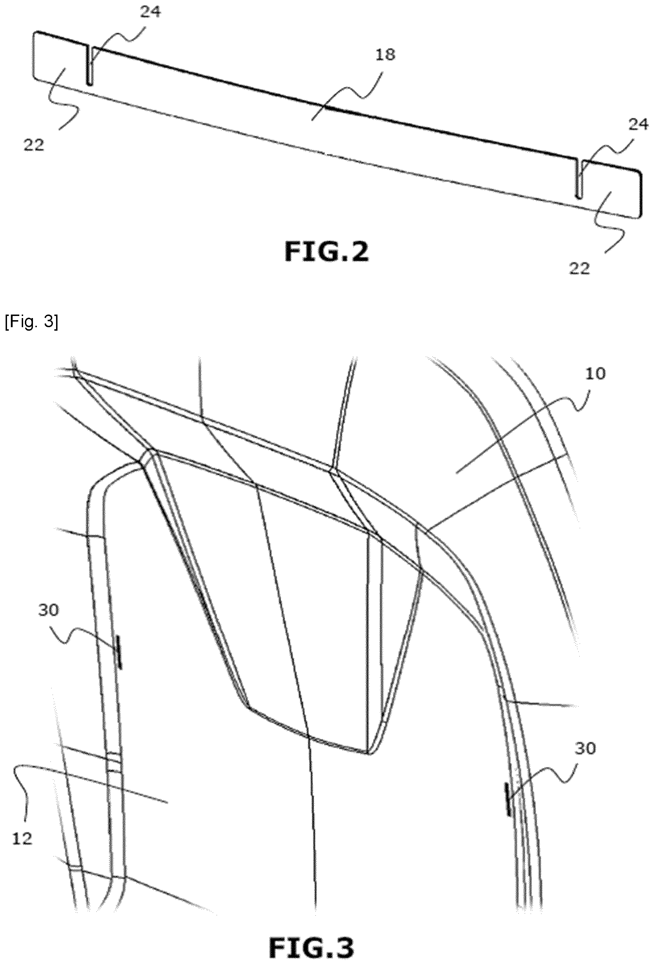

Conformément à l'invention, la poche 14 présente un bord d'ouverture 16 contenant un profil de renfort 18 (non visible sur la figure 1), décrit plus en détail ci-après en lien avec la figure 2. Le profil de renfort 18 épouse la forme de la paroi 12 lorsque la poche 14 est fermée. Ainsi, lorsque la poche 14 est vide, elle est entièrement plaquée contre la paroi 12. Cela est particulièrement bien adapté, mais non limité, à une paroi 12 de dossier rigide ou semi-rigide.

Le bord d'ouverture 16 contient également une sangle élastique 20 (non visible sur la figure 1), décrite plus en détail ci-après.

La figure 2 illustre le profil de renfort 18 qui est contenu dans le bord d'ouverture 16. Le profil de renfort 18 peut être réalisé en matière plastique, mais cet exemple n'est pas limitatif, le profil de renfort 18 pouvant tout aussi bien être réalisé dans une matière organique.

Dans le mode particulier de réalisation illustré, le profil de renfort 18 est une lame présentant à chacune de ses extrémités une portion 22 pliable.

Par ailleurs, avantageusement, le profil de renfort 18 présente au voisinage de chacune de ses extrémités une fente 24, dans laquelle passe la sangle élastique 20. Les fentes 24 peuvent être situées au niveau des plis des portions 22 pliables.

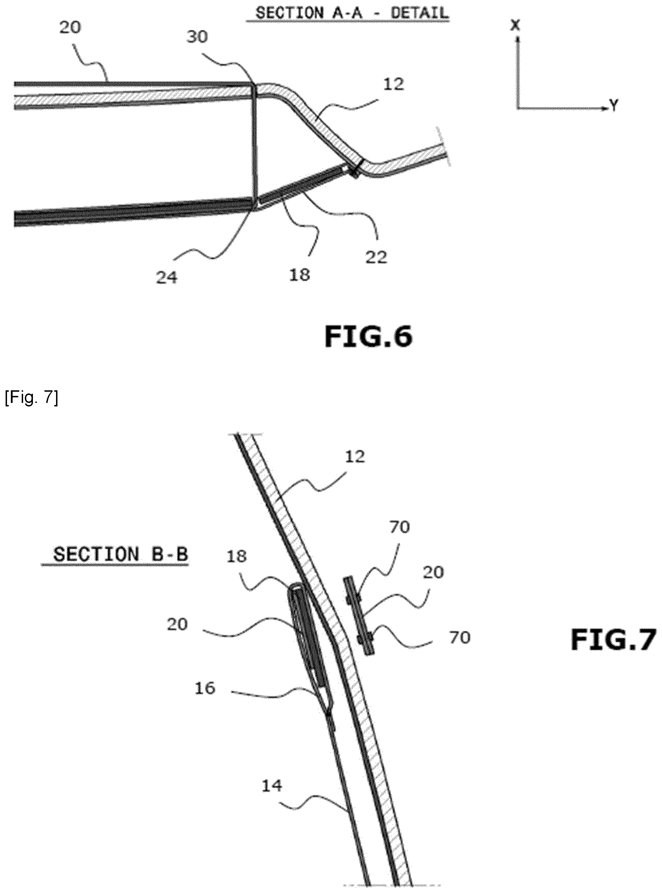

De telles fentes 24 sont également présentes sur le bord d'ouverture 16 au voisinage de chacune de ses extrémités, comme décrit ci-après en lien avec la figure 6.

La figure 3, qui illustre le dos du siège 10 sans la poche 14 de rangement pour les seuls besoins de la description, montre que la paroi 12 du siège 10 est munie de deux orifices 30 dans lesquels passe la sangle élastique 20 (non représentée sur la figure 3). Ainsi, la sangle élastique 20 traverse la paroi 12.

Les orifices 30 sont avantageusement réalisés sous la forme de fentes verticales de dimensions légèrement supérieures à celles de la sangle élastique 20.

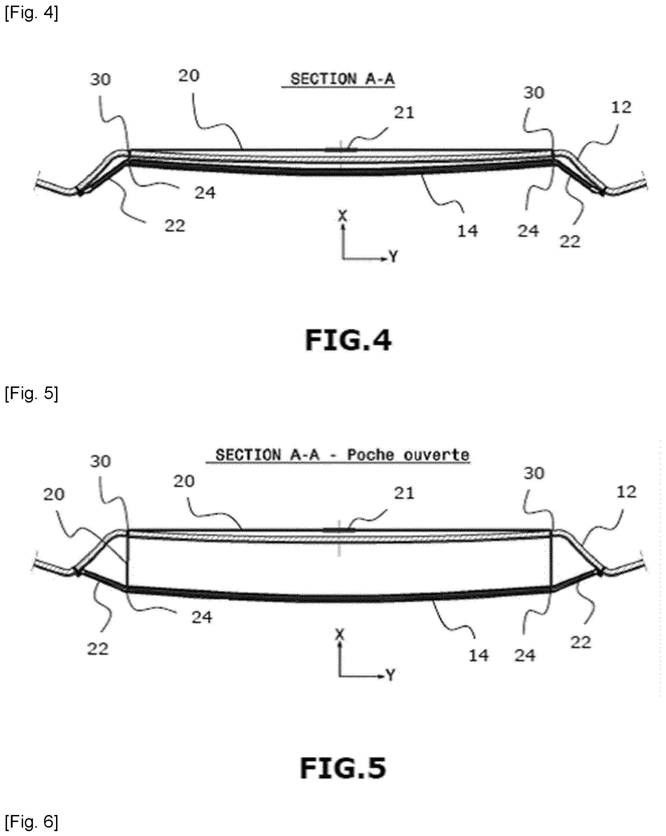

La figure 4 illustre la paroi 12 du siège 10, la poche 14 de rangement avec ses portions 22 pliables et la sangle élastique 20, dans la section A-A indiquée sur la figure 1, dans une configuration où la poche 14 est fermée.

On distingue aussi les fentes 24 pratiquées dans le bord d'ouverture 16 et dans le profil de renfort 18, ainsi que les orifices 30 dans la paroi 12.

Grâce aux portions 22 pliables du profil de renfort 18, la poche 14 est plaquée contre la paroi 12 et épouse sa forme.

Dans le mode particulier de réalisation illustré, les deux extrémités de la sangle élastique 20 se chevauchent dans une région 21 et sont fixées entre elles. Par exemple, la sangle élastique 20 peut être réalisée sous la forme d'un ruban plat dont les deux extrémités sont fixées entre elles par une ou plusieurs agrafes 70 (visibles sur la figure 7). La sangle élastique 20 peut être réalisée dans toute matière extensible, par exemple textile (similaire à celle d'une bretelle), ou en caoutchouc, ces exemples n'étant nullement limitatifs.

La figure 5 illustre les mêmes éléments que la figure 4 dans une configuration où la poche 14 est ouverte. Grâce au profil de renfort 18 et à la sangle élastique 20 qui, en s'étirant, décrit une forme sensiblement rectangulaire, la poche 14 peut s'ouvrir largement, tout en se plaquant à nouveau contre la paroi 12 lorsqu'elle se referme.

La figure 6 représente une vue agrandie d'un détail de la figure 5, dans la région d'extrémité droite de la poche 14 lorsqu'elle est ouverte. On y distingue plus nettement la fente 24 pratiquée dans le bord d'ouverture 16 et dans le profil de renfort 18, ainsi que l'orifice 30 de droite prévu dans la paroi 12 et traversé par la sangle élastique 20.

La figure 7 est une vue partielle de la poche 14 et de la paroi 12 dans la section B-B indiquée sur la figure 1. Elle montre le bord d'ouverture 16 confectionné à la façon d'un ourlet qui est cousu sur la poche 14 et contenant le profil de renfort 18 et la sangle élastique 20.

La sangle élastique 20 passe devant le profil de renfort 18, c'est-à-dire sur la face du profil de renfort la plus éloignée de la paroi 12.

La sangle élastique 20 traverse la paroi 12 et les deux extrémités de la sangle élastique 20 se chevauchent et sont fixées entre elles dans la zone de chevauchement par les deux agrafes 70. En variante, les extrémités de la sangle élastique 20 peuvent être fixées entre elles par collage ou rivetage ou au moyen de bandes auto-agrippantes prévues sur au moins les deux parties d'extrémité de la sangle qui se chevauchent, ou par tout autre moyen.

## Revendications

1. Siège (10) de véhicule automobile comportant une paroi (12) munie d'une poche (14) de rangement, ladite poche (14) présentant un bord d'ouverture (16) contenant un profil de renfort (18) épousant la forme de ladite paroi (12) lorsque la poche (14) est fermée et une sangle élastique (20) traversant ladite paroi (12), **caractérisé en ce que** les deux extrémités de ladite sangle élastique (20) sont fixées entre elles.

2. Siège (10) selon la revendication 1, **caractérisé en ce que** ledit bord d'ouverture (16) et ledit profil de renfort (18) présentent au voisinage de chacune de leurs extrémités une fente (24) dans laquelle passe ladite sangle élastique (20).

3. Siège (10) selon la revendication 1 ou 2, **caractérisé en ce que** ledit profil de renfort (18) est une lame présentant à chacune de ses extrémités une portion (22) pliable.

4. Siège (10) selon la revendication 3, **caractérisé en ce que** lesdites fentes (24) sont situées au niveau des plis desdites portions (22) pliables.

5. Siège (10) selon l'une quelconque des revendications précédentes, **caractérisé en ce que** ladite paroi (12) est munie de deux orifices (30) dans lesquels passe ladite sangle élastique (20).

6. Siège (10) selon l'une quelconque des revendications précédentes, **caractérisé en ce que** ladite sangle élastique (20) est un ruban plat et ses deux extrémités sont fixées entre elles par au moins une agrafe (70).

7. Siège (10) selon l'une quelconque des revendications précédentes, **caractérisé en ce que** ledit profil de renfort (18) est en matière plastique.

8. Siège (10) selon l'une quelconque des revendications précédentes, **caractérisé en ce que** c'est un siège avant.

9. Véhicule automobile, **caractérisé en ce qu'**il comporte au moins un siège (10) selon l'une quelconque des revendications précédentes.

## Patentansprüche

1. Kraftfahrzeugsitz (10), aufweisend eine mit einer Verstautasche (14) versehene Wand (12), wobei die Tasche (14) einen Öffnungsrand (16) mit einem Verstärkungsprofil (18), das sich an die Form der Wand (12) anpasst, wenn die Tasche (14) geschlossen ist, und einen elastischen Gurt (20) aufweist, der durch die Wand (12) geht, **dadurch gekennzeichnet, dass** die beiden Enden des elastischen Gurts (20) miteinander fixiert sind.

2. Sitz (10) nach Anspruch 1, **dadurch gekennzeichnet, dass** der Öffnungsrand (16) und das Verstärkungsprofil (18) in der Nähe jedes ihrer Enden einen Schlitz (24) aufweisen, durch den der elastische Gurt (20) geht.

3. Sitz (10) nach Anspruch 1 oder 2, **dadurch gekennzeichnet, dass** das Verstärkungsprofil (18) eine Lamelle ist, die an jedem ihrer Enden einen faltbaren Abschnitt (22) aufweist.

4. Sitz (10) nach Anspruch 3, **dadurch gekennzeichnet, dass** die Schlitze (24) auf der Höhe der Falze der faltbaren Abschnitte (22) angeordnet sind.

5. Sitz (10) nach einem der vorhergehenden Ansprüche, **dadurch gekennzeichnet, dass** die Wand (12) mit zwei Öffnungen (30) versehen ist, durch die der elastische Gurt (20) geht.

6. Sitz (10) nach einem der vorhergehenden Ansprüche, **dadurch gekennzeichnet, dass** der elastische Gurt (20) eine flaches Band ist und seine beiden Enden durch mindestens eine Spange (70) miteinander fixiert sind.

7. Sitz (10) nach einem der vorhergehenden Ansprüche, **dadurch gekennzeichnet, dass** das Verstärkungsprofil (18) aus Kunststoff ist.

8. Sitz (10) nach einem der vorhergehenden Ansprüche, **dadurch gekennzeichnet, dass** es sich um einen Vordersitz handelt.

9. Kraftfahrzeug, **dadurch gekennzeichnet, dass** es mindestens einen Sitz (10) nach einem der vorhergehenden Ansprüche aufweist.

## Claims

1. Motor vehicle seat (10) comprising a wall (12) provided with a storage pocket (14), said pocket (14) having an opening edge (16) containing a reinforcing profile (18) that matches the shape of said wall (12) when the pocket (14) is closed, and an elastic strap (20) passing across said wall (12), **characterized in that** the two ends of said elastic strap (20) are attached to each other.

2. Seat (10) according to Claim 1, **characterized in that** said opening edge (16) and said reinforcing profile (18) have, close to each of their ends, a slot (24) in which said elastic strap (20) passes.

3. Seat (10) according to Claim 1 or 2, **characterized in that** said reinforcing profile (18) is a blade having, at each of its ends, a bendable portion (22).

4. Seat (10) according to Claim 3, **characterized in that** said slots (24) are located at the bends of said bendable portions (22).

5. Seat (10) according to any one of the preceding claims, **characterized in that** said wall (12) is provided with two orifices (30) in which said elastic strap (20) passes.

6. Seat (10) according to any one of the preceding claims, **characterized in that** said elastic strap (20) is a flat ribbon and its two ends are attached to each other by at least one staple (70).

7. Seat (10) according to any one of the preceding claims, **characterized in that** said reinforcing profile (18) is made of plastic material.

8. Seat (10) according to any one of the preceding claims, **characterized in that** it is a front seat.

9. Motor vehicle, **characterized in that** it comprises at least one seat (10) according to any one of the preceding claims.
